# EUROPÄISCHE PATENTANMELDUNG

(11) **EP 3 613 521 A1**
(43) Veröffentlichungstag der Anmeldung: **26.02.2020**
(21) Anmeldenummer: 18189843.8
(22) Anmeldetag: 21.08.2018
(51) Int. Cl.: B22F 3/00, B22F 3/18, B22F 3/22, B22F 3/10, B33Y 10/00, B28B 1/00

(54) **VERFAHREN ZUM HERSTELLEN EINES BAUTEILS DURCH POSITIONIEREN VON PARTIKELGEFÜLLTEN, STRUKTURIERTEN SCHICHTELEMENTEN**

(71) Anmelder: Siemens Aktiengesellschaft, 80333 München (DE)
(72) Erfinder: Schuh, Carsten, 85598 Baldham (DE)

(57) **Zusammenfassung**

Die Erfindung betrifft ein Verfahren zum Herstellen eines Bauteils (8) mit den Schritten: Bereitstellen eines Ausgangsmaterials (2), welches Metallpartikel und/oder Keramikpartikel umfasst, Herstellen eines Grünkörpers (6) aus dem Ausgangsmaterial (2), wobei zum Herstellen des Grünkörpers (6) in zeitlich aufeinanderfolgenden Schritten jeweils ein Teil des Ausgangsmaterials (2) auf ein Substrat (7) und/oder auf einen zuvor aufgetragenen Teil des Ausgangsmaterials (2) positioniert wird und thermisches Behandeln des hergestellten Grünkörpers (6), wobei in den zeitlich aufeinanderfolgenden Schritten aus dem Ausgangsmaterial (2) ein plattenförmiges Schichtelement (1) hergestellt wird und das Schichtelement (1) strukturiert wird und die jeweiligen strukturierten Schichtelemente (3) auf dem Substrat (7) und/oder auf einem zuvor positionierten strukturierten Schichtelement (3) positioniert werden.

## Beschreibung

Die vorliegende Erfindung betrifft ein Verfahren zum Herstellen eines Bauteils, bei welchem ein Ausgangsmaterial bereitgestellt wird, welches Metallpartikel und/oder Keramikpartikel umfasst. Des Weiteren wird ein Grünkörper aus dem Ausgangsmaterial hergestellt. Zum Herstellen des Grünkörpers wird in zeitlich aufeinanderfolgenden Schritten jeweils ein Teil des Ausgangsmaterials auf ein Substrat und/oder auf einen zuvor aufgetragenen Teil des Ausgangsmaterials positioniert. Im Anschluss wird dann der hergestellte Grünkörper thermisch behandelt.

Das Interesse richtet sich auf die Herstellung von Bauteilen und insbesondere auf die Herstellung komplexer dreidimensionaler Strukturen. Insbesondere soll das Bauteil aus einer Metall(-legierung), einer Keramik und/oder einem Kompositmaterial gefertigt werden. Aus diesem partikelgefüllten Ausgangsmaterial soll ein Grünkörper hergestellt werden, der anschließend thermisch bearbeitet wird.

In diesem Zusammenhang sind aus dem Stand der Technik unterschiedliche additive Fertigungsverfahren bekannt, welche sich zur Erzeugung von dreidimensionalen Bauteilen oder Körpern durch die Herstellung eines Grünkörpers aus partikelgefüllten thermoplastischen Massen oder Schlickern mit anschließender Sinterung eignen. Beispielsweise ist die Lithographiebasierte Keramikfertigung bekannt, bei welcher analog zur Stereolithographie mit Licht einer definierten Wellenlänge eine radikalische Polymerisation eines Bindersystems erfolgt, wodurch eine Suspension verfestigt wird. Zudem ist die sogenannte Schmelz-Extrusion bekannt, bei welcher beispielsweise thermoplastische Massen, Feedstocks und Filamente bearbeitet werden können. Hierbei wird eine thermoplastische Masse durch Wärmezufuhr in einen fließfähigen Zustand überführt und an der gewünschten Stelle abgeschieden. Dort erstarrt die Masse sofort wieder bei der Abkühlung. Ferner ist die 3D-Extrusion oder das sogenannte Robocasting bekannt. Hierbei können kalte viskose beziehungsweise plastische Massen über eine Düse extrudiert und abgelegt werden. In diesem Fall können entweder Massen auf Basis natürlicher Rohstoffe, beispielsweise Porzellan, Ton oder dergleichen, verarbeitet werden. Alternativ dazu können Massen auf Basis synthetischer Rohstoffe, bei denen die Plastizität durch organische Additive erreicht wird, verwendet werden. Bei diesem Verfahren wird ein kontinuierlicher Strang in Bahnen entlang der Bauteilgeometrie abgelegt. Ferner ist der direkte 3D-Druck mittels Suspensionen bekannt. In diesem Fall können beispielsweise (nano-)partikelgefüllten Tinten gedruckt werden. Darüber hinaus sind sogenannte aerosol-basierte Verfahren bekannt. Schließlich sind aus dem Stand der Technik Laminier-Verfahren bekannt, bei denen ein Formkörper durch schichtweises Laminieren aufgebaut wird. Hierbei wird jede Schicht nach dem Auftragen entsprechend einer Modellvorgabe zugeschnitten. Erst dann erfolgt das Auftragen der nächsten Schicht. Derartige Verfahren werden auch als LOM-Verfahren (LOM - Laminated Object Manufacturing) bezeichnet.

Es ist Aufgabe der vorliegenden Erfindung, eine Lösung aufzuzeigen, wie die Herstellung eines Bauteils, insbesondere eines komplexen dreidimensionalen Bauteils, verbessert werden kann.

Diese Aufgabe wird erfindungsgemäß durch ein Verfahren mit den Merkmalen des Patentanspruchs 1 gelöst. Vorteilhafte Weiterbildungen der vorliegenden Erfindung sind in den abhängigen Ansprüchen angegeben.

Ein erfindungsgemäßes Verfahren dient zum Herstellen eines Bauteils. Das Verfahren umfasst das Bereitstellen eines Ausgangsmaterials, welches Metallpartikel und/oder Keramikpartikel umfasst. Zudem umfasst das Verfahren das Herstellen eines Grünkörpers aus dem Ausgangsmaterial. Zum Herstellen des Grünkörpers wird in zeitlich aufeinanderfolgenden Schritten jeweils ein Teil des Ausgangsmaterials auf ein Substrat und/oder auf einen zuvor aufgetragenen Teil des Ausgangsmaterials aufgetragen. Im Anschluss daran wird der hergestellte Grünkörper thermisch behandelt. Dabei ist vorgesehen, dass in den zeitlich aufeinanderfolgenden Schritten aus dem Ausgangsmaterial ein plattenförmiges Schichtelement hergestellt wird und das Schichtelement strukturiert wird. Außerdem werden die jeweiligen strukturierten Schichtelemente auf dem Substrat und/oder auf einem zuvor positionierten strukturierten Schichtelement positioniert.

Mithilfe des Verfahrens soll ein Bauteil und insbesondere ein komplexes dreidimensionales Bauteil hergestellt werden. Bei dem Bauteil kann es sich insbesondere um einen Teil einer elektrischen oder elektronischen Komponente handeln. Beispielsweise kann das Bauteil Bestandteil einer elektrischen Maschine, eines Transformators, eines Elektronikbauteils oder dergleichen sein. Zum Herstellen des Bauteils wird zunächst das Ausgangsmaterial bereitgestellt. Das Ausgangsmaterial umfasst Metallpartikel und/oder Keramikpartikel. Es wird also ein partikelgefülltes Ausgangsmaterial bereitgestellt. Es kann auch vorgesehen sein, dass das Ausgangsmaterial Partikel einer Metalllegierung und/oder eines Kompositwerkstoffs umfasst. Zum Herstellen des Grünkörpers wird das Ausgangsmaterial verwendet. Dabei kann das Ausgangsmaterial zunächst auf das Substrat beziehungsweise ein entsprechendes Trägerelement aufgebracht werden. Hierbei erfolgt die Abgabe des Ausgangsmaterials beziehungsweise von jeweiligen Teilen des Ausgangsmaterials in mehreren zeitlich aufeinanderfolgenden Schritten. Das Ausgangsmaterial wird in den jeweiligen Schritten übereinander und/oder nebeneinander abgegeben oder positioniert, sodass der dreidimensionale Grünkörper geformt wird. Im Anschluss daran wird der Grünkörper thermisch behandelt. Insbesondere ist es vorgesehen, dass ein sogenanntes Entbindern und Sintern durchgeführt wird, um das Bauteil herzustellen.

Gemäß einem wesentlichen Aspekt der vorliegenden Erfindung ist es vorgesehen, dass in den zeitlich aufeinanderfolgenden Schritten aus dem Ausgangsmaterial ein Schichtelement gefertigt beziehungsweise geformt wird, welches plattenförmig ausgebildet ist. Mit anderen Worten handelt es sich bei dem Schichtelement also um eine Schicht oder eine Folie. Das Schichtelement weist bevorzugt eine Dicke oder Höhe auf, welche deutlich geringer ist als eine Breite und eine Länge des Schichtelements. Dabei ist bevorzugt vorgesehen, dass die Dicke des Schichtelements konstant ist. Beispielsweise kann das Schichtelement eine Dicke zwischen 10 µm und 500 µm, bevorzugt zwischen 100 µm und 300 µm, aufweisen. Des Weiteren werden die jeweiligen Schichtelemente strukturiert oder zugeschnitten. Durch das Strukturieren kann die gewünschte Form vorgegeben werden. Es kann vorgesehen sein, dass die jeweils hergestellten strukturierten Schichtelemente die gleiche Form aufweisen. Bevorzugt unterscheidet sich aber die Form von zumindest einigen der strukturierten Schichtelemente. Die jeweiligen strukturierten Schichtelemente werden in den aufeinanderfolgenden Schritten auf dem Substrat und/oder auf den bereits abgelegten strukturierten Schichtelementen positioniert. Die jeweiligen Schichtelemente können nacheinander an vorbestimmten Positionen abgelegt werden. Aus den jeweiligen strukturierten Schichtelementen wird also ein Schichtaufbau beziehungsweise ein Laminat erstellt.

Gemäß der Erfindung ist vorgesehen, dass ein pastöses oder viskoses Ausgangsmaterial, welches mit den Partikeln gefüllt ist, in Form der strukturierten Schichtelemente sequentiell abgelegt wird. Aus den strukturierten Schichtelementen kann dann der Grünkörper ausgebildet werden und im Anschluss daran thermisch behandelt werden beziehungsweise entbindert und gesintert werden. Das erfindungsgemäße Verfahren unterscheidet sich von bekannten Prozessen der additiven Fertigung beziehungsweise von bekannten 3D-Druckverfahren, insbesondere des bekannten LOM-Verfahrens (Laminated Object Manufacturing) durch die Art der Generierung der einzelnen strukturierten Schichtelemente beziehungsweise Materiallagen sowie durch den sequentiellen Aufbau. Durch das Bereitstellen der Schichtelemente, die gezielte Formgebung der Schichtelemente und die Positionierung der strukturierten Schichtelemente kann eine hohe Detailgenauigkeit erreicht werden. Zudem kann eine verbesserte Oberflächenqualität mit einer geringen Rauigkeit und Trennschärfe erzielt werden.

Bevorzugt wird durch das Aufsetzen der strukturierten Schichtelemente auf das Substrat und/oder auf das zuvor positionierte strukturierte Schichtelement der Grünkörper mit einer dreidimensionalen Form hergestellt. Zum Herstellen des Grünkörpers können ein oder mehrere Werkzeuge verwendet werden. Beispielsweise kann ein Werkzeug verwendet werden, um aus dem Ausgangsmaterial das Schichtelement zu fertigen. Ferner kann ein Werkzeug verwendet werden, mittels welchem das Schichtelement strukturiert werden kann. Es kann auch ein Werkzeug verwendet werden, mittels welchem das strukturierte Schichtelement transportiert und/oder relativ zu dem Substrat bewegt werden kann. Es kann auch vorgesehen sein, dass das Substrat entsprechend bewegt werden kann. Somit können die strukturierten Schichtelemente aufeinander angeordnet werden, um den dreidimensionalen Grünkörper herzustellen. Dabei kann der Grünkörper aus den strukturierten Schichtelementen aus unterschiedlichen Raumrichtungen aufgebaut werden.

In einer Ausführungsform umfasst das Ausgangsmaterial ein Lösungsmittel und zum Herstellen des Schichtelements wird ein Gießverfahren verwendet. Mit anderen Worten kann das Ausgangsmaterial ein sogenannter Schlicker sein, der zusätzlich zu den Partikeln ein entsprechendes Lösungsmittel umfasst. Dieses Lösungsmittel kann wässrig oder organisch sein. Eine derartige Suspension beziehungsweise ein derartiger Schlicker kann kostengünstig hergestellt werden. Zudem ergibt sich eine breite Anpassbarkeit der partikelgefüllten Suspension hinsichtlich der Rheologie und des Füllgrads. Dieser viskose oder pastöse Schlicker kann dann mittels eines Gießverfahrens zu dem Schichtelement verarbeitet werden. Hierzu kann beispielsweise ein Gießverfahren analog zu dem sogenannten Tape-Casting oder Foliengießen genutzt werden. Bei einem solchen Verfahren kann der Schlicker auf eine Unterlage aufgebracht werden, um mittels eines Rakels so verteilt zu werden, dass dieser die gewünschte Dicke aufweist. Zudem kann der Schlicker durch Ziehverfahren, Pressverfahren oder dergleichen bearbeitet werden, um das Schichtelement herzustellen.

Gemäß einer alternativen Ausführungsform umfasst das Ausgangsmaterial ein thermoplastisches Material und das Schichtelement wird durch Pressen und/oder Auswalzen hergestellt. Bei dem Ausgangsmaterial kann es sich um einen sogenannten Feedstock, also eine partikelgefüllte thermoplastische Masse ohne Lösungsmittel, handeln. Zum Bereitstellen des Schichtelements kann dieser Feedstock zumindest bereichsweise erwärmt und/oder plastifiziert werden. Zu diesem Zweck kann eine entsprechende Heizeinrichtung verwendet werden. Hier kann das Schichtelement beziehungsweise eine dünne Folienlage durch Erwärmen des Feedstocks und anschließendes Auswalzen, Pressen oder dergleichen hergestellt werden. Es kann auch vorgesehen sein, dass das Ausgangsmaterial als partikelgefülltes Filament bereitgestellt wird. Mit anderen Worten kann das Ausgangsmaterial also in Form einer Faser beziehungsweise eines Drahtes bereitgestellt werden. Auch hier kann es vorgesehen sein, dass dieses Ausgangsmaterial in Form des Filaments zum Bereitstellen des Schichtelement entsprechend erwärmt oder plastifiziert und anschließend durch Walzen oder Pressen bearbeitet wird.

Die Ausgangsbasis für das neuartige Formgebungsverfahren bilden immer Metall- und/oder Keramik gefüllte Suspensionen entweder in der Form eines Feedstocks (thermoplastische Masse ohne Lösungsmittel) oder eines Schlickers (lösungsmittelhaltig, wässrig oder organisch). Durch die hochgefüllten Suspensionen können gute Gründichten und damit auch hochdichte Sinterkörper erzielt werden. Dies ist insbesondere wichtig bei schwer zu sinternden oder nicht kongruent schmelzbaren Materialien oder sehr hohen Schmelztemperaturen. Insbesondere zeichnen sich diese speziellen Suspensionen dabei durch eine Recyclierbarkeit aus, dies bedeutet, es besteht eine Möglichkeit zur Rückschleusung des nicht konstruktiv verbrauchten Materials in den Herstellungskreislauf. Bei thermoplastischen Feedstocks ist dies normalerweise grundsätzlich gegeben. Bei Schlickern ist dabei auf eine Wiederaufbereitbarkeit durch eine Lösungsmittelzugabe nach der Trocknung zu achten. Dadurch kann ein kosteneffizientes Herstellungsverfahren ermöglicht werden.

Bei der Herstellung des Grünkörpers können die einzelnen Schritte parallel durchgeführt werden. Beispielsweise kann das Herstellen der Schichtelemente, das Strukturieren der Schichtelemente und/oder das Laminieren beziehungsweise Positionieren der strukturierten Schichtelemente parallelisiert durchgeführt werden. Somit sind hohe Aufbaugeschwindigkeiten möglich.

Vorzugsweise wird das Schichtelement mittels einer Trenneinrichtung strukturiert. Bei der Trenneinrichtung kann es sich beispielsweise um einen entsprechenden Draht, ein Messer oder dergleichen handeln. Ferner kann als Trenneinrichtung auch ein Stanzwerkzeug verwendet werden. Es kann auch vorgesehen sein, dass das Ausgangsmaterial zum Abtrennen lokal erwärmt wird. Zum Erwärmen und/oder Plastifizieren des Ausgangsmaterials kann beispielsweise Infrarotstrahlung, eine induktive Heizeinrichtung, ein Laser oder dergleichen verwendet werden. Dies ermöglicht eine einfache Strukturierung des Schichtelements.

Bevorzugt ist vorgesehen, dass das Schichtelement derart strukturiert wird, dass zumindest eine Kante des strukturierten Schichtelements in einem vorbestimmten Winkel schräg zu einer Hochrichtung des strukturierten Schichtelements ausgerichtet ist. Es können also in Hochrichtung beziehungsweise entlang einer Flächennormalen des Schichtelements schräge Anschnitte erzeugt werden. Damit können sogenannte 2,5D-Formen erzeugt werden. Dies vereinfacht die Herstellung des Grünkörpers als 3D-Form.

In einer weiteren Ausführungsform wird das strukturierte Schichtelement mit dem Substrat und/oder dem bereits positionierten strukturierten Schichtelement bei dem Positionieren zumindest bereichsweise formschlüssig und/oder kraftschlüssig verbunden. Die jeweiligen strukturierten Schichtelemente können also so aufeinander und/oder nebeneinander angeordnet werden, dass die jeweiligen strukturierten Schichtelemente formschlüssig miteinander verbunden sind. Mit anderen Worten wird ein Formschluss des strukturierten Schichtelements und der bereits gebauten Struktur erzeugt. Hierdurch kann nach der thermischen Behandlung des Grünkörpers beziehungsweise nach dem Sintern eine verringerte Porosität erreicht werden. Dies bedeutet, dass sich nach dem Sintern eine dichte, homogene Mikrostruktur ergibt.

Es kann auch vorgesehen sein, dass die strukturierten Schichtelemente zumindest teilweise kraftschlüssig miteinander verbunden werden. Ferner kann es vorgesehen sein, dass das strukturierte Schichtelement bei dem Positionieren zumindest bereichsweise mit einer vorbestimmten Kraft beaufschlagt wird. Hierzu kann das strukturierte Schichtelement von oben auf die bereits aufgebrachten Schichtelemente inklusive einer Krafteinbringung zugeführt werden. Alternativ dazu kann das strukturierte Schichtelement analog zum Transferdruck von oben auf den ortsfesten, aber vorteilhafterweise absenkbaren Laminatkörper beziehungsweise die bereits abgelegten Schichtelemente aufgedrückt oder aufgebracht werden. Dabei ist die vorbestimmte Kraft insbesondere so gewählt, dass eine ungewünschte Deformation des strukturierten Schichtelements sowie der bereits abgelegten Schichtelemente unterbleibt. Es kann auch vorgesehen sein, dass das strukturierte Schichtelement nach dem Positionieren plastisch verformt wird. Insgesamt kann dadurch die Dichte des Ausgangsmaterials beziehungsweise der Schichtelemente erhöht werden und somit Porosität verringert werden.

In einer weiteren Ausführungsform wird eine Oberfläche des Substrats und/oder des bereits positionierten strukturierten Schichtelements vor dem Positionieren des strukturierten Schichtelements vorbehandelt. In diesem Fall können eine lokale Vorerwärmung und/oder ein Anlösen vorgesehen sein. Beispielsweise kann die Oberfläche mit einem organischen oder wässrigen Lösungsmittel befeuchtet oder besprüht werden. Somit kann das Laminieren der strukturierten Schichtelemente vereinfacht werden.

In einer weiteren Ausführungsform wird der Grünkörper vor dem thermischen Behandeln nachverdichtet. Der Grünkörper beziehungsweise das Laminat kann einer isostatischen Nachverdichtung unterzogen werden. Hierzu kann es auch vorgesehen sein, dass der Grünkörper erwärmt wird. Auf diese Weise kann die Gründichte erhöht werden.

Es kann auch vorgesehen sein, dass zum Herstellen des Grünkörpers zumindest ein weiteres Ausgangsmaterial verwendet wird. Auch das weitere Ausgangsmaterial kann Metallpartikel und/oder Keramikpartikel umfassen. Grundsätzlich kann es auch vorgesehen sein, dass mehrere Ausgangsmaterialien für die Herstellung des Grünkörpers verwendet werden. Diese Ausgangsmaterialien können sich bezüglich der Art der Partikel und/oder der Konzentration der Partikel voneinander unterscheiden. Somit wird es beispielsweise ermöglicht, dass Grünkörper mit einer Gradierung beziehungsweise unterschiedlichen Konzentrationen und/oder Volumenanteilen der Partikel hergestellt werden können.

Weitere Merkmale der Erfindung ergeben sich aus den Ansprüchen, den Figuren und der Figurenbeschreibung. Die vorstehend in der Beschreibung genannten Merkmale und die Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert. Dabei zeigen:
- FIG 1: eine schematische Perspektivansicht eines Schichtelements, welches aus einem Ausgangsmaterial gefertigt ist;
- FIG 2: eine schematische Perspektivansicht eines strukturierten Schichtelements; und
- FIG 3: eine geschnittene Seitenansicht eines Grünköpers, welcher eine Mehrzahl von übereinander angeordneten strukturierten Schichtelementen umfasst.

In den Figuren werden gleiche oder funktionsgleiche Elemente mit den gleichen Bezugszeichen versehen.

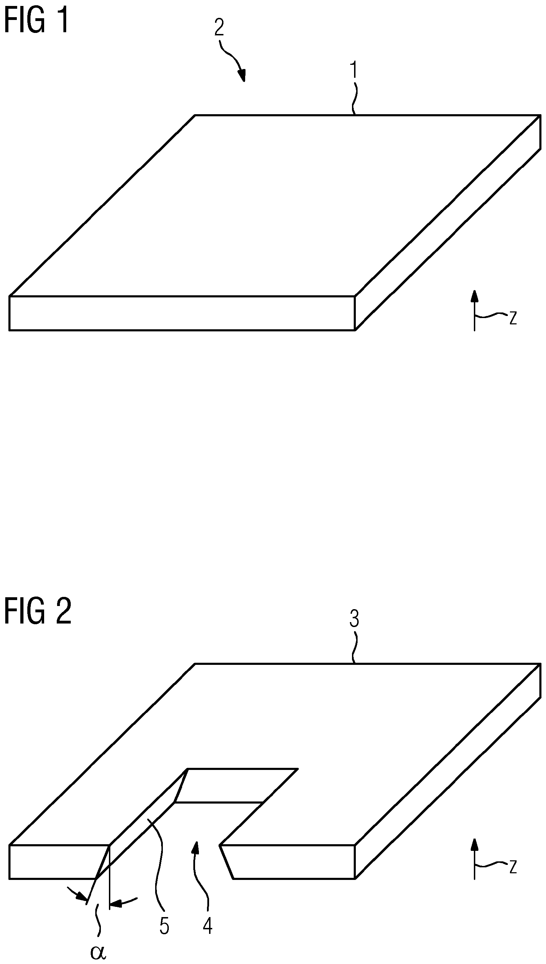

FIG 1 zeigt in einer stark vereinfachten Perspektivansicht ein Schichtelement 1, welches aus einem Ausgangsmaterial 2 gefertigt ist. Bei dem Ausgangsmaterial 2 handelt es sich um ein Material, welches Metallpartikel und/oder Keramikpartikel umfasst. Es kann auch vorgesehen sein, dass das Ausgangsmaterial Partikel einer Metalllegierung und/oder eines Kompositwerkstoffs umfasst.

Dabei kann das Ausgangsmaterial 2 als Schlicker beziehungsweise Suspension bereitgestellt werden. In diesem Fall umfasst das Ausgangsmaterial 2 neben den Metallpartikeln und/oder Keramikpartikeln ein Lösungsmittel, welches wässrig oder organisch sein kann. Das Ausgangsmaterial 2 kann pastös sein und eine vorbestimmte Viskosität aufweisen. In diesem Fall kann das Schichtelement 1 durch ein entsprechendes Gießverfahren hergestellt werden.

Als Ausgangsmaterial 2 kann auch ein sogenannter Feedstock verwendet werden, wobei in diesem Fall das Ausgangsmaterial 2 zusätzlich ein thermoplastisches Material umfasst. Um das Schichtelement 1 aus diesem Ausgangsmaterial 2 herzustellen, kann ein Press- und/oder Walzverfahren verwendet werden.

Das Schichtelement 1 ist plattenförmig ausgebildet und weist entlang einer Hochrichtung z eine Dicke auf, welche deutlich geringer ist als eine Breite und Länge des Schichtelements 1. Beispielsweise kann das Schichtelement 1 eine Dicke zwischen 10 µm und 500 µm aufweisen.

FIG 2 zeigt ebenfalls in einer stark vereinfachten Perspektivansicht ein strukturiertes Schichtelement 3. Um das strukturierte Schichtelement 3 herzustellen, wird das Schichtelement 1 strukturiert beziehungsweise zugeschnitten. Hierzu kann eine entsprechende Trenneinrichtung, beispielweise ein Messer, ein Draht, eine Stanzform, ein Laser oder dergleichen verwendet werden. Auf diese Weise kann die gewünschte Form herausgearbeitet werden. Bei Feedstocks kann zudem eine Erwärmung vorgesehen sein. In dem vorliegenden vereinfachten Beispiel wurde eine Aussparung 4 in das Schichtelement 1 eingebracht, um das strukturierte Schichtelement 3 herzustellen. Bei dem Strukturieren des Schichtelements 1 können auch Kanten 5 hergestellt werden, welche um einen vorbestimmten Winkel α zur Hochrichtung z beziehungsweise zur Flächennormalen geneigt sind. Auf diese Weise kann das strukturierte Schichtelement 3 als sogenannte 2,5D-Form bereitgestellt werden.

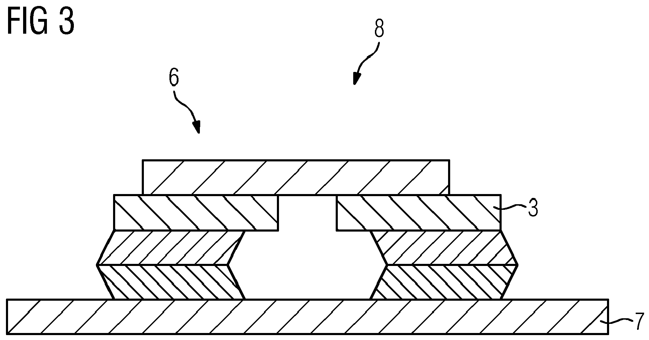

FIG 3 zeigt in einer geschnittenen Seitenansicht eine beispielhafte Darstellung eines Grünkörpers 6. Zur Herstellung des Grünkörpers 6 werden die strukturierten Schichtelemente 3 auf ein Substrat 7 und/oder auf bereits abgelegte strukturierte Schichtelemente 3 positioniert. Dabei kann es vorgesehen sein, dass das Substrat 7 und/oder die bereits abgelegten strukturierten Schichtelemente 3 vor dem Ablegen eines strukturierten Schichtelements 3 erwärmt und/oder mit einem Lösungsmittel angelöst werden. Wie in der FIG 3 zu erkennen ist, ermöglicht die 2,5D-Strukturierbarkeit des Schichtelements 1 hohe Aspektverhältnisse oder sogenannte Überhänge.

Dadurch kann auf entsprechende Stützstrukturen verzichtet werden. Zudem ergibt sich eine hohe Detailgenauigkeit, eine gute Oberflächenqualität (geringe Rauhigkeit) und Trennschärfe.

Bei dem Positionieren der strukturierten Schichtelemente 3 werden diese formschlüssig miteinander verbunden. Optional kann es vorgesehen sein, dass die strukturierten Schichtelemente 3 auch zumindest bereichsweise kraftschlüssig miteinander verbunden werden. Nach dem Aufbau des gesamten Grünkörpers 6 kann dieser einer isostatischen Nachverdichtung unterzogen werden, um die Gründichte zu erhöhen. Im Anschluss daran wird der Grünköper 6 thermisch behandelt, um ein Bauteil 8 herzustellen. Insbesondere wird eine Entbinderung und Sinterung durchgeführt.

Insgesamt sind durch den Ansatz über hochgefüllte Suspensionen gute Gründichten und damit auch hochdichte Sinterkörper erzielbar. Dies ist insbesondere wichtig bei schwer zu sinternden beziehungsweise nicht kongruent schmelzbaren Materialien oder sehr hohen Schmelztemperaturen. Durch die Ablage der strukturierten Schichtelemente 3 im Formschluss und/oder Kraftschluss inklusive der optionalen plastischen Kompression und isostatischen Nachverdichtung kann die Gründichte erhöht und die Porosität verringert werden. Dadurch können dichte, homogene Mikrostrukturen und Gefüge nach dem Sintern erreicht werden. Das Verfahren eignet sich zum Aufbau in mehreren Raumrichtungen (Transferdruck). Außerdem sind größere Bauvolumina durch die hohe Eigenstabilität des erzeugten Grünlings realisierbar.

## Patentansprüche

1. Verfahren zum Herstellen eines Bauteils (8) mit den Schritten:
- Bereitstellen eines Ausgangsmaterials (2), welches Metallpartikel und/oder Keramikpartikel umfasst,
- Herstellen eines Grünkörpers (6) aus dem Ausgangsmaterial (2),
- wobei zum Herstellen des Grünkörpers (6) in zeitlich aufeinanderfolgenden Schritten jeweils ein Teil des Ausgangsmaterials (2) auf ein Substrat (7) und/oder auf einen zuvor aufgetragenen Teil des Ausgangsmaterials (2) positioniert wird und
- thermisches Behandeln des hergestellten Grünkörpers (6),
**dadurch gekennzeichnet, dass**
- in den zeitlich aufeinanderfolgenden Schritten aus dem Ausgangsmaterial (2) ein plattenförmiges Schichtelement (1) hergestellt wird und das Schichtelement (1) strukturiert wird und
- die jeweiligen strukturierten Schichtelemente (3) auf dem Substrat (7) und/oder auf einem zuvor positionierten strukturierten Schichtelement (3) positioniert werden.

2. Verfahren nach Anspruch 1, **dadurch gekennzeichnet, dass** durch das Aufsetzen der strukturierten Schichtelemente (3) auf das Substrat (7) und/oder auf das zuvor positionierte strukturierte Schichtelement (3) der Grünkörper (6) mit einer dreidimensionalen Form hergestellt wird.

3. Verfahren nach Anspruch 1 oder 2, **dadurch gekennzeichnet, dass** das Ausgangsmaterial (2) ein Lösungsmittel umfasst und zum Herstellen des Schichtelements (1) ein Gießverfahren verwendet wird.

4. Verfahren nach Anspruch 1 oder 2, **dadurch gekennzeichnet, dass** das Ausgangsmaterial (2) ein thermoplastisches Material umfasst und das Schichtelement (1) durch Pressen und/oder Auswalzen hergestellt wird.

5. Verfahren nach einem der vorhergehenden Ansprüche, **dadurch gekennzeichnet, dass** das Schichtelement (1) mittels einer Trenneinrichtung strukturiert wird.

6. Verfahren nach einem der vorhergehenden Ansprüche, **dadurch gekennzeichnet, dass** das Schichtelement (1) derart strukturiert wird, dass zumindest eine Kante (5) des strukturierten Schichtelements (3) in einem vorbestimmten Winkel (α) schräg zu einer Hochrichtung (z) des strukturierten Schichtelements (3) ausgerichtet ist.

7. Verfahren nach einem der vorhergehenden Ansprüche, **dadurch gekennzeichnet, dass** das strukturierte Schichtelement (3) mit dem Substrat (7) und/oder dem bereits positionierten strukturierten Schichtelement (3) bei dem Positionieren zumindest bereichsweise formschlüssig und/oder kraftschlüssig verbunden wird.

8. Verfahren nach einem der vorhergehenden Ansprüche, **dadurch gekennzeichnet, dass** das strukturierte Schichtelement (3) bei dem Positionieren zumindest bereichsweise mit einer vorbestimmten Kraft beaufschlagt wird.

9. Verfahren nach einem der vorhergehenden Ansprüche, **dadurch gekennzeichnet, dass** eine Oberfläche des Substrats (7) und/oder des bereits positionierten strukturierten Schichtelements (3) vor dem Positionieren des strukturierten Schichtelements (3) vorbehandelt wird.

10. Verfahren nach einem der vorhergehenden Ansprüche, **dadurch gekennzeichnet, dass** der Grünkörper (6) vor dem thermischen Behandeln nachverdichtet wird.
